# EUROPEAN PATENT SPECIFICATION

(11) **EP 3 288 198 B1**
(45) Date of publication and mention of the grant of the patent: **28.04.2021**
(21) Application number: 16185277.7
(22) Date of filing: 23.08.2016
(51) Int. Cl.: H04J 3/06, H04L 12/40

(54) **SYSTEM AND METHOD OF CLOCK SYNCHRONIZATION IN A COMPUTER NETWORK**
SYSTEM UND VERFAHREN ZUR TAKTSYNCHRONISIERUNG IN EINEM COMPUTERNETZWERK
SYSTÈME ET PROCÉDÉ DE SYNCHRONISATION D'HORLOGE DANS UN RÉSEAU INFORMATIQUE

(43) Date of publication of application: 28.02.2018
(73) Proprietor: Robert Bosch GmbH, 70442 Stuttgart (DE)
(72) Inventor: DIARRA, Aboubacar, 70469 Stuttgart-Feuerbach (DE)

(56) References cited:
- WO-A1-2013/189536
- US-A1- 2005 055 469
- US-A1- 2013 163 617

## Description

### Background

The invention relates to a system and method of clock synchronization in a computer network.

Clock synchronization in computer networks uses for example the precision time protocol well-known as PTP. This protocol is used to synchronize clocks throughout a computer network.

At the start-up of the computer network a common time base is established, and a grandmaster sends a "Sync" message to network nodes comprising clocks configured as slaves. The network nodes receive the "Sync" message and correct the clock in conformity with the reference time provided in the "Sync" message to establish the common time base throughout the computer network.

Time synchronization is necessary in heterogeneous in-vehicle time and safety critical networks and other industrial networks.

US 2005/0055469 A1 discloses that a generation of timestamps may be performed by the physical layer of ports wherein a timestamp event may be generated at the time of transmission and reception of a time sync notification ordered set (TSNOS), wherein a time sync packet exchange protocol may be used wherein a delay request and delay response message may be implemented using the TSNOS and a follow up message may be a transport layer packet. When two or more domains are connected together, time synchronization may be enabled across the inter-domain link by configuring one end of the link as inter-domain slave and the other end as the inter domain master, wherein computed time and frequency offsets between a grandmaster clock of the inter-domain slave port and a grandmaster clock of the inter-domain master port may be passed up the time synchronization hierarchy in the slave domain by using a transport layer packet.

US 2005/0055469 A1 discloses that timers of a plurality of slave units are synchronized with a timer of a master unit.

### Disclosure of the invention

It is therefore desirable to provide a reliable and robust time synchronization mechanism.

This is achieved by a method according to claim 1. Accordingly in a computer network a first grandmaster sends a first synchronization information for a first network segment of the computer network, a second grandmaster sends a second synchronization information for a second network segment of the transmission scheduling of the FlexRay bus operating in a different network segment of the computer network. This way the data transmission scheduling of the respective network segments benefit from the fault tolerant behavior of the precision time protocol. This way the communication between an electronic control unit in one network segment and another electronic control unit in another network segment is based on the common time base. This allows for example communication between the electronic control units on different bus systems via one or several gateways using a common or an aligned data transmission scheduling.

Advantageously, the synchronization information that is exchanged between the grandmasters is only exchanged in a specific network segment of the computer network for connecting the grandmasters. This reduces the load on the computer network in the other network segments.

Advantageously, time synchronization reference for synchronizing a clock of a network segment is send by a respective grandmaster only in that network segment. This way the load on the other network segments is reduced further.

Further aspects of the invention will become apparent by consideration of the detailed description and accompanying drawings.

Embodiments of the present invention are illustrated by way of example referencing the figures by the accompanying drawings, in which like references indicate similar elements and in which
- Figure 1: shows part of a computer network,
- Figure 2: shows schematically message transmission between four grandmasters,
- Figure 3: shows schematically a common time base establishment logic between grandmasters,
- Figure 4: shows schematically data transmission scheduling in a heterogeneous network based on Ethernet and FlexRay.

In the following description, numerous specific details are introduced to provide a thorough understanding of, and enabling description for, embodiments of the suggested method of clock synchronization. One skilled in the art, however, will recognize that these embodiments can be practiced without one or more of the specific details, or with other components, systems, etc.

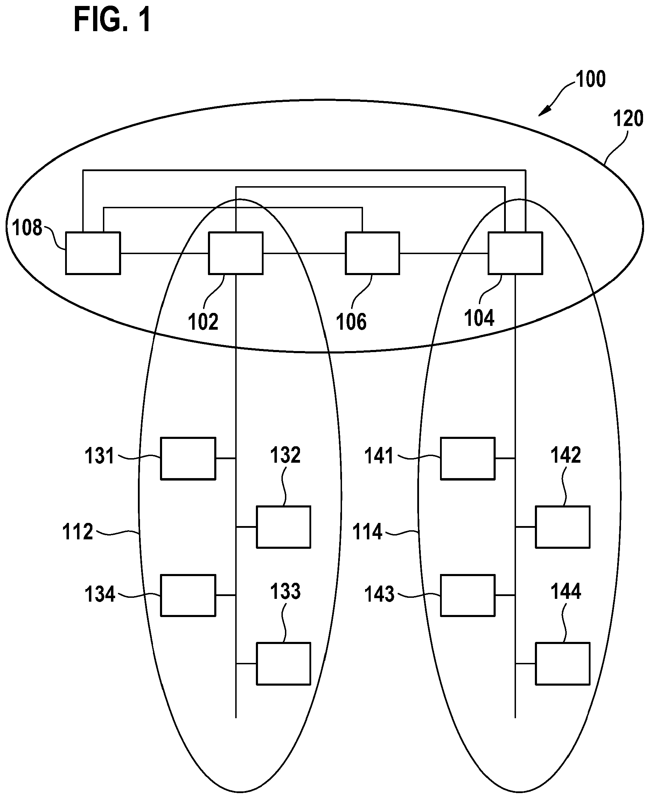

Figure 1 depicts a part of a computer network 100. The computer network 100 may be an in vehicle network that connects different electronic control units providing various features for operating the vehicle. The computer network 100 may also connect other electronic control units that provide features in the industrial field, for example for operating production lines.

The computer network 100 according to figure 1 comprises a first grandmaster 102, a second grandmaster 104, a third grandmaster 106, and a fourth grandmaster 108. The computer network 100 is not limited to four grandmasters. The computer network 100 may comprise a plurality of grandmasters or less than four.

The grandmasters are connected by data links depicted in figure 1 as solid lines in the example of figure 1 the grandmasters are each connected to each other grandmaster by a separate data link.

However, the connection between grandmasters may not be a direct link. Instead or additionally indirect links between two grandmasters via another grandmaster or bridges may be implemented.

The data links connecting the grandmasters are in the example part of a specific network segment 120 of the computer network 104 connecting the grandmasters. Data transmission on the specific network segment 120 is on the physical layer and/or the data link layer according to a first protocol. The physical layer and/or data link layer are in the example implemented according to the Ethernet protocol, in particular by means of IEEE 802.1 AS-2011 protocol, well-known as gPTP, Ethernet AVB. Additionally, a mechanism to improve the fault tolerant behavior of gPTP clock synchronization with two or more time masters in an Ethernet based network is implemented.

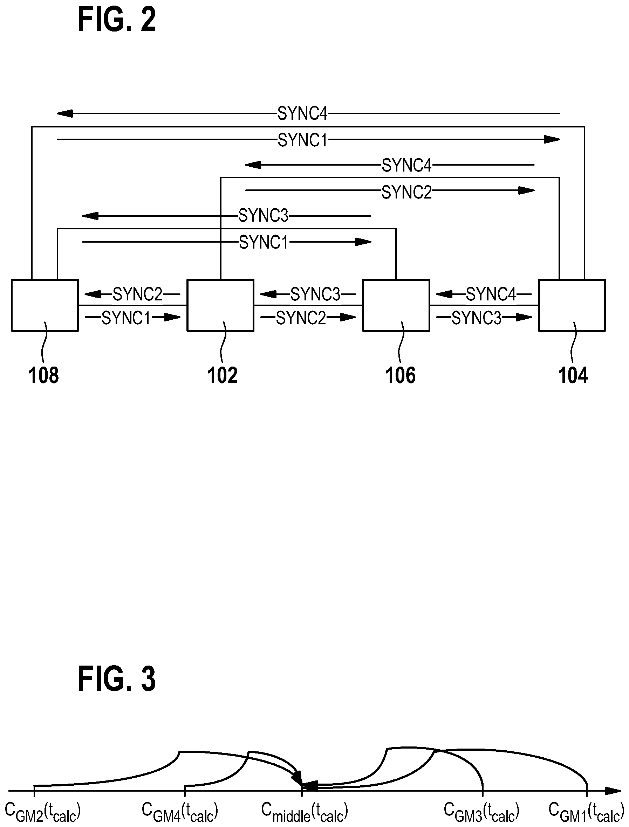

By use of "Sync" messages according to the Ethernet AVB protocol, a common time base is established between a plurality of grandmasters. This is depicted in figures 2 and 3.

In figure 2 the fourth grandmaster 108 sends a first message, SYNC1 via a respective of the data links to the first grandmaster 102. The first grandmaster 102 sends a second message, SYNC2, via a respective of the data links to the third grandmaster 106. The third grandmaster sends a third message, SYNC3, via a respective of the data links to the second grandmaster 104.

The fourth grandmaster 108 sends the first message, SYNC1, also via respective data links to the second grandmaster 104 and the third grandmaster 106. Likewise the first grandmaster 102 sends the second message, SYNC2, via respective of the data links to the second grandmaster 104 and the fourth grandmaster 108. Likewise the third grandmaster 106 sends the third message, SYNC3, via respective of the data links to the first grandmaster 102 and the fourth grandmaster 108. Likewise the second grandmaster 104 sends a fourth message SYNC4 via respective of the data links to the first grandmaster 102, the third grandmaster 106, and the fourth grandmaster 108.

The time synchronization to establish the common time base is preferably implemented at the start-up of the computer network 100. Advantageously, the time synchronization is repeated, for example frequently, during the operation of the computer network 100.

The common time value C_{middle} (t_{calc}) is determined as depicted in figure 3, for example as the arithmetic mean of the time C_{GM1}(t_{calc}), C_{GM2}(t_{calc}), C_{GM3}(t_{calc}), and C_{GM4}(t_{calc}), which is in the example exchanged in the respective of the first message, SYNC1, second message, SYNC2, third message, SYNC3, fourth message, SYNC4 by the respective of the first grandmaster 102, the second grandmaster 104, the third grandmaster 106 and the fourth grandmaster 108.

Instead of the arithmetic mean any other form of averaging the time may be used as well. This way the grandmasters each establish the common time base.

As depicted in figure 1, in the example, the first grandmaster 102 and the second grandmaster 104 connect to a first network segment 112 and a second network segment 114 respectively. In the example the first network segment 112 of the computer network 100 and the second network segment 114 of the computer network 100 are only connected to each other via the first grandmaster 102 and the second grandmaster 104.

The first network segment 112 and the second network segment 114 comprise electronic control units that are connected to the respective of the grandmasters via data links depicted in figure 1 as solid lines.

The first grandmaster 102 sends a first synchronization information for the first network segment 112. The second grandmaster 104 sends a second synchronization information for the second network segment. The first synchronization information and/or the second synchronization information is send on the physical layer and/or data link layer according to a second protocol. The second protocol is different from the first protocol. In the example, the second protocol is the FlexRay protocol, in particular according to ISO 17458/ 1 to 17458/5. Any other communication technology with deterministic time scheduling may be used as well.

The first synchronization information is a first time synchronization reference for the first network segment 112. The second synchronization information is a second time synchronization reference for the second network segment 114. Preferably, the first time synchronization reference and the second time synchronization reference are synchronized according to the common time base established between a plurality of grandmasters 102, 104, 106, 108. The plurality of grandmasters 102, 104, 106, 108 exchange synchronization information as described above. Alternatively or additionally, the first grandmaster 102 and the second grandmaster 104 exchanges third synchronization information and the synchronization of the first time synchronization reference and the second time synchronization reference is according to the third synchronization information. The third synchronization information is for example a common time base established between the first grandmaster 102 and the second grandmaster 104. For example the Best Master Clock Algorithm is used to establish the time base of one of the grandmaster as common time base.

Preferably, the synchronization information that is exchanged between the grandmasters 102, 104, 106, 108 is only exchanged in the specific network segment 120 of the computer network for connecting the grandmasters. Additionally, the time synchronization reference for synchronizing a clock of a network segment 112, 114 is send by a respective grandmaster 102, 104 only in that network segment 112, 114. This way the load on the respective network segments 112, 114 is significantly reduced while the synchronization still benefits from the common time base.

In the example, the first network segment 112 comprises a first ECU 131, a second ECU 132, a third ECU 133 and a forth ECU 134 that are connected to the first grandmaster 102. The second network segment 114 comprises a fifth ECU 141, a sixth ECU 142, a seventh ECU 143 and an eighth ECU 144 that are connected to the second grandmaster 104.

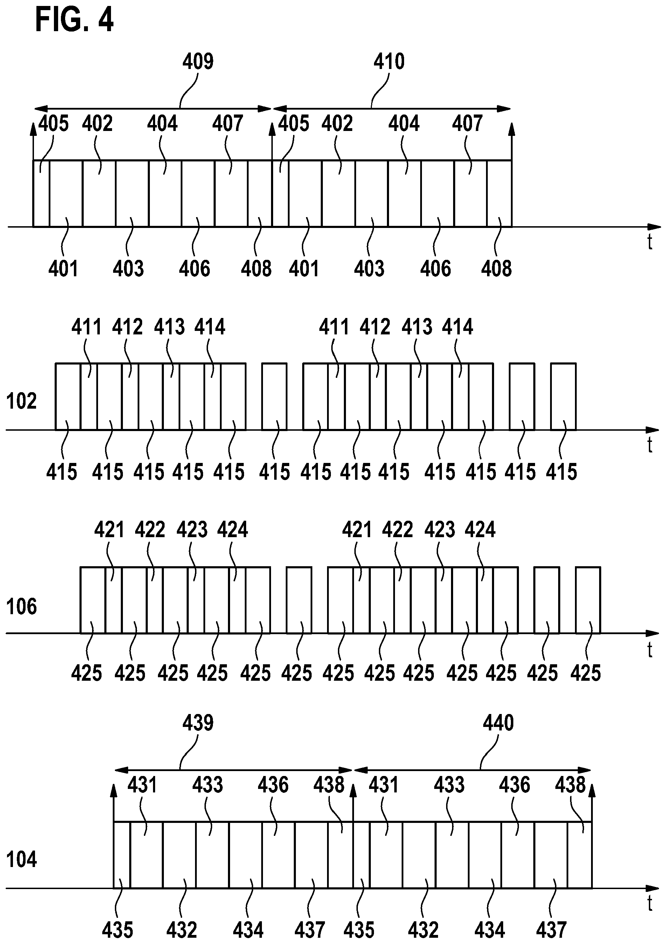

Data transmission scheduling in a heterogeneous network including the first network segment 112, the second network segment 114 and the specific network segment 120 is explained below referencing figure 4.

Figure 4 depicts time slots for transmitting data in the first network segment 112 over time in a first cycle 409 and a second cycle 410.

At the beginning of the first cycle 409 in a first time slot 405 the first grandmaster 102 sends a synchronization message according to the second protocol, for example a FlexRay synchronization message. Afterwards, in a second time slot 401, a third time slot 402, a fourth time slot 403, and a fifth time slot 404 the first ECU 131, the second ECU 132, the third ECU 133 and the fourth ECU 134 send according to the second protocol, for example a frame according to the FlexRay protocol. Afterwards in a sixth time slot 406, a seventh time slot 407 and a eighth time slot 408 additional data according to the second protocol is transmitted. For example "Dyn", "Symb Wind", and "NIT" according to the FlexRay Protocol are transmitted.

Afterwards, the first cycle 409 ends. In the example the second cycle 410 is send after the first cycle 409 and comprises the same time slots and order of time slots.

According to figure 4 in the second network segment 114 data is transmitted in a first cycle 439 and a second cycle 440. At the beginning of the first cycle 439 is a first time slot 435 for transmitting synchronization information according to a second protocol, for example a FlexRay synchronization message from the second grandmaster 104. Afterwards, data according to the second protocol is transmitted in a second time slot 131, a third time slot 132, a fourth time slot 433, and a fifth time slot 134. In these time slots, data of the first ECU 131, the second ECU 132, the third ECU 133, and the fourth ECU 134 is forwarded in the example as a respective frame according to the FlexRay protocol. Afterwards, in a fifth time slot 436, a seventh time slot 137, and an eighth time slot 138 additional data according to the second protocol, for example "Dyn", "Symb Wind", and "NIT" according to the FlexRay Protocol are transmitted. Afterwards, the first cycle 139 ends. In the example the second cycle 440 begins after the first cycle 139 ended. The second cycle 440 contains the same time slots and/or time slots as the first cycle 439.

According to the example, the first cycle 409 in the first network segment 112 begins at a different time later than the first cycle 439 in the second network segment 114. Accordingly, data is transferred from the first network segment 112 via the first grandmaster 102, the second grandmaster 104 and in the example via the third grandmaster 106.

The communication between the grandmasters according to the first protocol is depicted by indicating the time slots over time for the first grandmaster 102, the second grandmaster 104 and the third grandmaster 106 in figure 4 as well.

In the example a guard band, that is an empty time slot 415 and an empty time slot 425 is used in the data transmission via the first protocol. According to the example after a guard band 415 the first grandmaster 102 sends in a first time slot 411 data received from the first ECU 131. After another guard band 115, the first grandmaster 102 sends in a second time slot 412, data received from the second ECU 132. After another guard band 415, the first grandmaster 102 sends in a third time slot 430 data received from the third ECU 132. After another guard band 415, the first grandmaster 102 sends in a fourth time slot, data received from the fourth ECU 134. Afterwards another guard band 415 is used. The sending of the data of the respective ECU is aligned with the availability of the data at the first grandmaster 102. The guard band 415 is used to wait until the first time slot 401 in the first cycle 409 in the first network segment 112 ended. At that time the data from the first ECU 131 is available at the first grandmaster 102 for further processing.

Consequently, at the third grandmaster 106 a guard band 425 is used and the first time slot 421 for sending data from the first ECU 131 is synchronized with the first slot 411 for sending the data of the first ECU 131 at the first grandmaster 102. The time slots may be aligned or start a predetermined period of time later. The corresponding time scheduling is implemented in the data transmission according to the first protocol and the second protocol respectively. By using the common time base, it is ensured that the time scheduling is reliable. After the third grandmaster 106 receives the data from the first ECU 131, that is after the first time slot 411 ends, the third grandmaster 106 sends the data from the first ECU 131 in a first time slot 421. In the example the data is send to the second grandmaster 104. After a guard band 425, data from the second ECU 132, received by the third grandmaster 106 is send in a second time slot 422. After another guard band 425, data received by the third grandmaster 106 from the third ECU 133 is send in a third time slot 423. After another guard band 425 data received from the fourth ECU 134 by the third grandmaster 106 is send in a fourth time slot 424. Then another guard band 425 is used.

Sending of the data by the first grandmaster 102 and the third grandmaster 106 is repeated for the second cycle 410.

Advantageously between the first cycle 409 and the second cycle 410 an additional guard band 415 and 425 may be used at the respective grandmaster 102, 106. This allows sending the additional data in the sixth time slot 406, the seventh time slot 407, and the eighth time slot 408 in the first cycle 409, and sending of the data in the first time slot 405 of the second cycle 410.

The second grandmaster 104 is in the example adapted to receive the data from the first ECU 131, the second ECU 132, the third ECU 133 and the fourth ECU 134 from the third grandmaster 106 and forward it in the second network segment 114 as described above.

The exemplary timing schedule describes a unidirectional connection for the easy use in the first network segment 112. The timing schedule may be different, and in particular allow bidirectional communication by providing time slots for the easy use of the second network segment 114 as well. For example the first cycle 409, 439 is used for communication in one direction and the second cycle 410, 440 is replaced with corresponding time slots for communication in the other direction.

A system comprising the described grandmasters and easy use connected by the data links using the protocols described above is implemented as well.

In particular a computer program may be used for implementing the various steps of the data transmission in the respective components of the systems.

## Claims

1. Method of clock synchronization in a computer network (100), the method comprising a first grandmaster (102) sending a first synchronization information for a first network segment (112) of the computer network (100), a second grandmaster (104) sending a second synchronization information for a second network segment (114) of the computer network (100), wherein the first grandmaster (102) and the second grandmaster (104) exchange third synchronization information, wherein the first grandmaster (102) and the second grandmaster (104) transmit the third synchronization information on the physical layer and/or data link layer according to a first protocol, and wherein the first synchronization information and/or the second synchronization information is sent on the physical layer and/or data link layer according to a second protocol, different from the first protocol.

2. The method according to claim 1, **characterized in that** the first synchronization information is a first time synchronization reference for the first network segment (112), and the second synchronization information is a second time synchronization reference for the second network segment (114), wherein the first time synchronization reference and the second time synchronization reference are synchronized according to the third synchronization information.

3. The method according to any preceding claim, **characterized in that** the third synchronization information is exchanged via a third grandmaster (106).

4. The method according to any preceding claim, **characterized in that** a plurality of grandmasters (102, 104, 106, 108) exchange synchronization information, and wherein a common time base is established between the plurality of grandmasters (102, 104, 106, 108).

5. The method according to claim 4, **characterized in that** a plurality of synchronization information is sent by a set of grandmasters (102, 104) for a set of respective network segments (112, 114), and wherein a plurality of clocks for the respective network segment (112, 114) of the set of network segments (112, 114) is synchronized to the common time base depending on the respective synchronization information of the plurality of synchronization information.

6. The method according to claim 4 or 5, **characterized in that** the synchronization information that is exchanged between the grandmasters (102, 104, 106, 108), is only exchanged in a specific network segment (120) of the computer network (100) for connecting the grandmasters (102, 104, 106, 108).

7. The method according to any of claims 4 to 6, **characterized in that** time synchronization reference for synchronizing a clock of a network segment (112, 114) is sent by a respective grandmaster (102, 104) only **in that** network segment (112, 114).

8. System for clock synchronization in a computer network (100), the system comprising a first grandmaster (112) configured to send a first synchronization information for a first network segment (112) of the computer network (100), a second grandmaster (114) configured to send a second synchronization information for a second network segment (114) of the computer network (100), wherein the first grandmaster (102) and the second grandmaster (104) are configured to exchange third synchronization information, wherein the first grandmaster (102) and the second grandmaster (104) are configured to transmit the third synchronization information on the physical layer and/or data link layer according to a first protocol, and wherein the first synchronization information and/or the second synchronization information is sent on the physical layer and/or data link layer according to a second protocol, different from the first protocol.

9. A computer readable medium comprising computer executable instructions which, when executed by a computer, cause the computer to carry out the method of any one of claims 1 to 7.

## Patentansprüche

1. Verfahren zur Uhrensynchronisation in einem Computernetzwerk (100), wobei das Verfahren umfasst, dass
ein erster Grandmaster (102) eine erste Synchronisationsinformation für ein erstes Netzwerksegment (112) des Computernetzwerks (100) sendet, ein zweiter Grandmaster (104) eine zweite Synchronisationsinformation für ein zweites Netzwerksegment (114) des Computernetzwerks (100) sendet, wobei der erste Grandmaster (102) und der zweite Grandmaster (104) dritte Synchronisationsinformationen austauschen, wobei der erste Grandmaster (102) und der zweite Grandmaster (104) die dritten Synchronisationsinformationen in der Bitübertragungsschicht und/oder der Sicherungsschicht gemäß einem ersten Protokoll übertragen, und wobei die ersten Synchronisationsinformationen und/oder die zweiten Synchronisationsinformationen in der Bitübertragungsschicht und/oder der Sicherungsschicht gemäß einem zweiten Protokoll, das sich von dem ersten Protokoll unterscheidet, gesendet werden.

2. Verfahren nach Anspruch 1, **dadurch gekennzeichnet, dass** die ersten Synchronisationsinformationen eine erste Zeitsynchronisationsreferenz für das erste Netzwerksegment (112) sind, und die zweiten Synchronisationsinformationen eine zweite Zeitsynchronisationsreferenz für das zweite Netzwerksegment (114) sind, wobei die erste Zeitsynchronisationsreferenz und die zweite Zeitsynchronisationsreferenz gemäß den dritten Synchronisationsinformationen synchronisiert werden.

3. Verfahren nach einem vorhergehenden Anspruch, **dadurch gekennzeichnet, dass** die dritten Synchronisationsinformationen über einen dritten Grandmaster (106) ausgetauscht werden.

4. Verfahren nach einem vorhergehenden Anspruch, **dadurch gekennzeichnet, dass** mehrere Grandmaster (102, 104, 106, 108) Synchronisationsinformation austauschen und wobei eine gemeinsame Zeitbasis zwischen den mehreren Grandmastern (102, 104, 106, 108) hergestellt wird.

5. Verfahren nach Anspruch 4, **dadurch gekennzeichnet, dass** mehrere Synchronisationsinformationen durch eine Menge von Grandmastern (102, 104) für eine Menge von jeweiligen Netzwerksegmenten (112, 114) gesendet werden, und wobei mehrere Uhren für das jeweilige Netzwerksegment (112, 114) der Menge von Netzwerksegmenten (112, 114) mit der gemeinsamen Zeitbasis in Abhängigkeit von den jeweiligen Synchronisationsinformationen der mehreren Synchronisationsinformationen synchronisiert werden.

6. Verfahren nach Anspruch 4 oder 5, **dadurch gekennzeichnet, dass** die Synchronisationsinformationen, die zwischen den Grandmastern (102, 104, 106, 108) ausgetauscht werden, nur in einem spezifischen Netzwerksegment (120) des Computernetzwerks (100) zum Verbinden der Grandmaster (102, 104, 106, 108) ausgetauscht werden.

7. Verfahren nach einem der Ansprüche 4 bis 6, **dadurch gekennzeichnet, dass** die Zeitsynchronisationsreferenz zum Synchronisieren einer Uhr eines Netzwerksegments (112, 114) nur in diesem Netzwerksegment (112, 114) durch einen jeweiligen Grandmaster (102, 104) gesendet wird.

8. System zur Uhrensynchronisation in einem Computernetzwerk (100), wobei das System Folgendes umfasst:
einen ersten Grandmaster (112), ausgelegt zum Senden einer ersten Synchronisationsinformation für ein erstes Netzwerksegment (112) des Computernetzwerks (100),
einen zweiten Grandmaster (114), ausgelegt zum Senden einer zweiten Synchronisationsinformation für ein zweites Netzwerksegment (114) des Computernetzwerks (100) ,
wobei der erste Grandmaster (102) und der zweite Grandmaster (104) ausgelegt sind zum Austauschen dritter Synchronisationsinformationen, wobei der erste Grandmaster (102) und der zweite Grandmaster (104) ausgelegt sind zum Übertragen der dritten Synchronisationsinformationen in der Bitübertragungsschicht und/oder der Sicherungsschicht gemäß einem ersten Protokoll, und wobei die ersten Synchronisationsinformationen und/oder die zweiten Synchronisationsinformationen in der Bitübertragungsschicht und/oder der Sicherungsschicht gemäß einem zweiten Protokoll, das sich von dem ersten Protokoll unterscheidet, gesendet werden.

9. Computerlesbares Medium, umfassend computerausführbare Anweisungen, die, wenn sie durch einen Computer ausgeführt werden, den Computer zum Ausführen des Verfahrens nach einem der Ansprüche 1 bis 7 veranlassen.

## Revendications

1. Procédé de synchronisation d'horloges dans un réseau informatique (100), le procédé comprenant
l'envoi par une première horloge principale (102) de premières informations de synchronisation pour un premier segment de réseau (112) du réseau informatique (100), l'envoi par une deuxième horloge principale (104) de deuxièmes informations de synchronisation pour un deuxième segment de réseau (114) du réseau informatique (100), dans lequel la première horloge principale (102) et la deuxième horloge principale (104) échangent des troisièmes informations de synchronisation, dans lequel la première horloge principale (102) et la deuxième horloge principale (104) transmettent les troisièmes informations de synchronisation sur la couche physique et/ou une couche de liaison de données selon un premier protocole, et dans lequel les premières informations de synchronisation et/ou les deuxièmes informations de synchronisation sont envoyées sur la couche physique et/ou la couche de liaison de données selon un second protocole, différent du premier protocole.

2. Procédé selon la revendication 1, **caractérisé en ce que** les premières informations de synchronisation sont une première référence de synchronisation temporelle pour le premier segment de réseau (112), et les deuxièmes informations de synchronisation sont une deuxième référence de synchronisation temporelle pour le deuxième segment de réseau (114), dans lequel la première référence de synchronisation temporelle et la seconde référence synchronisation temporelle sont synchronisées conformément aux troisièmes informations de synchronisation.

3. Procédé selon n'importe quelle revendication précédente, **caractérisé en ce que** les troisièmes informations de synchronisation sont échangées par l'intermédiaire d'une troisième horloge principale (106).

4. Procédé selon n'importe quelle revendication précédente, **caractérisé en ce qu'**une pluralité d'horloges principales (102, 104, 106, 108) échange des informations de synchronisation, et dans lequel une base de temps communie est établie entre la pluralité d'horloges principales (102, 104, 106, 108).

5. Procédé selon la revendication 4, **caractérisé en ce qu'**une pluralité d'informations de synchronisation est envoyée par un ensemble d'horloges principales (102, 104) pour un ensemble de segments de réseaux respectifs (112, 114), et dans lequel une pluralité d'horloges pour le segment de réseau respectif (112, 114) de l'ensemble de segments de réseau (112, 114) est synchronisée sur la base de temps commune en fonction des informations de synchronisation respectives de la pluralité d'informations de synchronisation.

6. Procédé selon la revendication 4 ou 5, **caractérisé en ce que** les informations de synchronisation qui sont échangées entre les horloges principales (102, 104, 106 ,108) sont échangés uniquement dans un segment de réseau spécifique (120) du réseau informatique (100) pour la connexion des horloges principales (102, 104, 106, 108) .

7. Procédé selon l'une quelconque des revendications 4 à 6, **caractérisé en ce qu'**une référence de synchronisation temporelle pour synchroniser une horloge d'un segment de réseau (112, 114) est envoyée par une horloge principale respective (102, 104) uniquement dans ce segment de réseau (112, 114).

8. Système de synchronisation d'horloges dans un réseau informatique (100), le système comprenant
une première horloge principale (112) configurée pour envoyer des premières informations de synchronisation pour un premier segment de réseau (112) du réseau informatique (100), une deuxième horloge principale (114) configurée pour envoyer des deuxièmes informations de synchronisation pour un deuxième segment de réseau (114) du réseau informatique (100), dans lequel la première horloge principale (102) et la deuxième horloge principale (104) sont configurées pour échanger des troisièmes informations de synchronisation, dans lequel la première horloge principale (102) et la deuxième horloge principale (104) sont configurées pour transmettre les troisièmes informations de synchronisation sur la couche physique et/ou une couche de liaison de données selon un premier protocole, et dans lequel les premières informations de synchronisation et/ou les deuxièmes informations de synchronisation sont envoyées sur la couche physique et/ou la couche de liaison de données selon un second protocole, différent du premier protocole.

9. Support lisible par ordinateur comprenant des instructions exécutables par ordinateur qui, à leur exécution par un ordinateur, amènent l'ordinateur à mettre en œuvre le procédé selon l'une quelconque des revendications 1 à 7
